(19) Europäisches Patentamt

European Patent Office

Office européen des brevets

(11) **EP 4 787 188 A1**

(12) **EUROPEAN PATENT APPLICATION**

(43) Date of publication:
05.08.2026 Bulletin 2026/32

(21) Application number: 25154785.7

(22) Date of filing: **29.01.2025**

(51) International Patent Classification (IPC):
**G06F 16/901** *(2019.01)* **G06N 5/02** *(2023.01)*
**G06N 5/022** *(2023.01)*

(52) Cooperative Patent Classification (CPC):
**G06F 16/9024; G06N 5/02; G06N 5/022;**
G06F 16/3329; G06F 16/3344

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **British Telecommunications Public
Limited Company
London E1 8EE (GB)**

(72) Inventor: **The designation of the inventor has not
yet been filed**

(74) Representative: **British Telecommunications
public limited company
Intellectual Property Department
9th Floor
One Braham
Braham Street
London E1 8EE (GB)**

(54) **TEMPORAL CONTEXT FOR RETRIEVAL AUGMENTED GENERATION**

(57) According to a first aspect, there is provided a knowledge graph (KG) configured for use in a retrieval augmented generation (RAG) process, the KG comprising: a plurality of nodes, each node representing a respective entity; and one or more edges, each edge connecting a respective pair of the plurality of nodes to one another; wherein each node has event metadata associated with it, that event metadata characterising one or more events in which the entity represented by the respective node was involved. Further aspects comprise: a data structure storing such a KG; a computer-implemented method of updating such a data structure; a computer-implemented RAG method using such a KG; and a computer-implemented method of configuring a network based on an answer to a query produced by performing such a RAG method.

100

Knowledge graph data store 130

Event metadata 132

Query interface 110

Retrieval augmented generation module 120

Prompt 140

Event metadata context 142

Large language model 150

Response interface 160

**FIG. 1**

## Description

### FIELD

The present disclosure relates to technology for assisting in automated decision-making in fields such as cybersecurity and telecommunication network management.

More specifically, aspects relate to: a knowledge graph (KG) configured for use in a retrieval augmented generation (RAG) process; a data structure storing such a KG; a computer-implemented method of updating such a data structure; a computer-implemented RAG method using such a KG; a computer-implemented method of configuring a network based on an answer to a query produced by performing such a RAG method; a data processing system configured to perform any such methods; a computer program comprising instructions which, when the program is executed by a computer, cause the computer to carry out any such methods; a computer-readable data carrier having stored thereon such a KG, such a data structure, or such a computer program; and a data carrier signal carrying such a KG, such a data structure, or such a computer program.

### BACKGROUND

Large quantities of data are increasingly available to help inform technical decisions. For example, at present around 3000 cybersecurity threat reports are issued per month; far more than a human cybersecurity analyst can realistically read. Similarly unwieldy quantities of telemetry data are generated from telecommunications networks. In fast-moving fields such as cybersecurity and telecommunication network management, there is a requirement to act on such data automatically and extremely rapidly.

Large language models (LLMs) have been developed, which can be queried to inform decisions based on such data, for example how best to automatically configure a network. LLMs can be provided with user-friendly front-ends, for example in the form of chatbots. However, LLMs require time, power, and memory-intensive retraining processes to keep them up-to-date.

Retrieval augmented generation (RAG) is an automatic prompt engineering process, which involves searching a data source for information relevant to a query, then using that information as context in a prompt to an LLM to answer the query. The data source used can for example be domain-specific, to enable a general purpose LLM to be used for answering specialised queries. RAG can also be used to generate more up to date responses from an LLM without retraining it, provided the data source used is kept up to date.

Knowledge graphs (KGs) are a particularly efficient way of storing information relating to multiple interlinked entities, such as computer and telecommunication networks. KGs can be used as data sources for RAG. However, updating KGs can be time-consuming and resource-intensive, generally requiring rebuilding of the KG from scratch. RAG using knowledge graphs is therefore generally not a suitable substitute for retraining of an LLM.

What is needed is means for efficiently obtaining up-to-date answers to queries for informing automatic technical decisions.

### SUMMARY

According to a first aspect, there is provided a KG configured for use in a RAG process, the KG comprising:

>   a plurality of nodes, each node representing a respective entity; and
>   one or more edges, each edge connecting a respective pair of the plurality of nodes to one another;

wherein each node has event metadata associated with it, that event metadata characterising one or more events in which the entity represented by the respective node was involved.

According to a second aspect, there is provided a computer-implemented RAG method, comprising:

>   obtaining event metadata determined to be relevant to a query from the KG of the first aspect; and
>   providing that event metadata as context in a prompt to a large language model, 'LLM', to answer that query.

In some examples, the computer-implemented RAG method comprises identifying, in the KG, event metadata to include in the context for the prompt by:

>   identifying one or more edges of the KG of relevance to the query;
>   identifying a plurality of nodes of the KG, each node of that plurality terminating at least one of those one or more edges; then

identifying, from event metadata stored in association with each of that plurality of nodes, event metadata relevant to the query to include in the context for the prompt.

According to a third aspect, there is provided a data structure storing the KG of the first aspect, the data structure comprising:
a hash table, referred to herein as an 'edge hash table', consisting of one or more buckets, each such bucket:

relating to one of the edges of the KG;
storing a semantic triple listing the respective pair of nodes connected by that edge as subject and object, together with a predicate designating a type of relationship between them; and
being accessible using a key generated from a vector embedding of one or more text snippets from which that semantic triple has been derived; and

the data structure further comprising:
a plurality of hash tables, referred to herein as 'event hash tables', each event hash table comprising the event metadata associated with a respective one of the plurality of nodes, wherein each event hash table consists of a plurality of buckets, each such bucket:

storing event metadata relating to a respective event; and
being accessible using a key generated from a vector embedding of a text snippet which that event was identified in.

The data structure can be configured for use in a computer-implemented method of configuring a network.
In some examples, identifying the one or more edges of the KG of relevance to the query comprises:

generating a vector embedding of the query;
determining an edge similarity score denoting a similarity between the vector embedding of the query and each of the vector embeddings from which the keys of the edge hash table are derived; and
selecting one or more edges of the KG in dependence on the edge similarity scores; and

identifying the event metadata relevant to the query comprises:

determining an event similarity score denoting a similarity between the vector embedding of the query and each of the vector embeddings from which the keys of the event hash tables for the identified nodes are derived;
selecting one or more events in dependence on the event similarity scores; and
retrieving the event metadata stored for those one or more selected events.

According to a fourth aspect, there is provided a computer-implemented method of updating the data structure of the third aspect, the method comprising:

obtaining a text-based data source;
identifying one or more subject entities referred to in the data source;
for each of one or more of those subject entities:

A. identifying an object entity referred to in the data source, and a predicate designating a type of relationship between the respective subject and object entities, to construct a semantic triple consisting of the subject entity, object entity, and predicate;

I. extracting, from the data source, a new text snippet from which that semantic triple is drawn;
II. generating a vector embedding of the new text snippet;
III. determining whether the semantic triple corresponds to an existing edge of the KG;

a. if so:

i. obtaining one or more historic text snippets stored in association with that existing edge;
ii. deleting an entry in the edge hash table corresponding to that existing edge;
iii. generating a vector embedding of a combination of the new text snippet and the one or more historic text snippets; and
iv. performing an operation comprising an edge hash function on that vector embedding to generate an edge embedding hash value;

b. if not, performing the operation comprising the edge hash function on the vector embedding of the new text snippet to generate an edge embedding hash value;

IV. storing the semantic triple in a bucket of the edge hash table at a memory location indicated by the edge embedding hash value;

B. identifying associated data in the data source characterising an event involving the subject entity, referred to herein as 'event metadata';
C. performing an operation comprising an event hash function on the vector embedding of the new text snippet to generate an event embedding hash value; and
D. storing the event metadata in a bucket of an event hash table for a node of the KG corresponding to the subject entity at a memory location indicated by the event embedding hash value.

Each vector embedding can be generated using an artificial neural network (ANN) optionally a hardware ANN, optionally an ANN trained on data relating to network security and/or management, optionally an ANN which performs deterministic vector embedding.
In some examples, the KG relates to network security and/or management.
According to a fifth aspect, there is provided a computer-implemented method of configuring a network, the method comprising:

determining a network configuration action based on an answer to the query produced by performing the method of the second aspect; and
causing the network configuration action to be performed.

According to a sixth aspect, there is provided a data processing system configured to perform the method of any of the second, fourth, or fifth aspects.
According to a seventh aspect, there is provided a computer program comprising instructions which, when the program is executed by a computer, cause the computer to carry out the method of the second, fourth, or fifth aspects.
According to an eighth aspect, there is provided a computer-readable data carrier having stored thereon the KG of the first aspect, the data structure of the third aspect, or the computer program of the seventh aspect.
According to a ninth aspect, there is provided a data carrier signal carrying the KG of the first aspect, the data structure of the third aspect, or the computer program of the seventh aspect.

## BRIEF DESCRIPTION OF THE FIGURES

Aspects of the present disclosure will now be described by way of example with reference to the accompanying figures. In the figures:

Figure 1 illustrates some elements of an example query answering system;
Figure 2 is a flowchart illustrating an example computer-implemented method of using a system such as that illustrated by Figure 1;
Figure 3 illustrates an example KG;
Figure 4 is a flowchart illustrating a process for obtaining event metadata determined to be relevant to a query from a KG;
Figure 5 is a flowchart illustrating a computer-implemented method of updating an example data structure;
Figure 6 schematically illustrates an example data processing system;
Figure 7 is a component diagram of an example machine learning (ML) module; and
Figure 8 schematically illustrates an example restricted Boltzmann machine (RBM).

## DETAILED DESCRIPTION

It is proposed herein to configure a KG comprising event metadata for use in providing the context to queries to an LLM in a RAG automatic prompt engineering process, such that the LLM is able to respond to queries having a temporal element without the LLM having to be regularly retrained.
'Event metadata', as referred to herein, is metadata concerning events; i.e. things which occur at certain points in time. Each piece of event metadata comprises sufficient information to place the event to which it relates in time. This may for example comprise one or more of: a time, a date, a time range, a date range, and data from which any of the foregoing can be derived (e.g. a reference to another event of known time/date). By incorporating such temporal metadata, the system can discern not only the relevance of information but also its temporal context. This allows for more precise retrieval of information based on when events occurred, which is particularly beneficial for queries where the timeline is crucial such as responding to novel cybersecurity threats, or minimising downtime due to telecommunications network faults. Temporal metadata also aids in disambiguating between events or entities with similar names or attributes but different timelines. This specificity is not typically present in generic KGs, and can improve the accuracy of the RAG system. By understanding the temporal metadata, the RAG system can prioritize information that is more recent/otherwise more relevant to the query. Temporal metadata enables the system to place events in their proper historical context, providing a more accurate understanding of the evolution of concepts and relationships over time. It also enables the system to analyse patterns over time to predict future trends or outcomes, leading to more informed and accurate retrieval of forward-looking information. Correlation of related events across different time periods is also enabled, enhancing the accuracy of information that is dependent on understanding these relationships. Furthermore, incorporating event information as node metadata, rather than creating new nodes or edges in response to receiving new event information, maintains the KG's structure, enables more efficient updates, and preserves the temporal context of events.

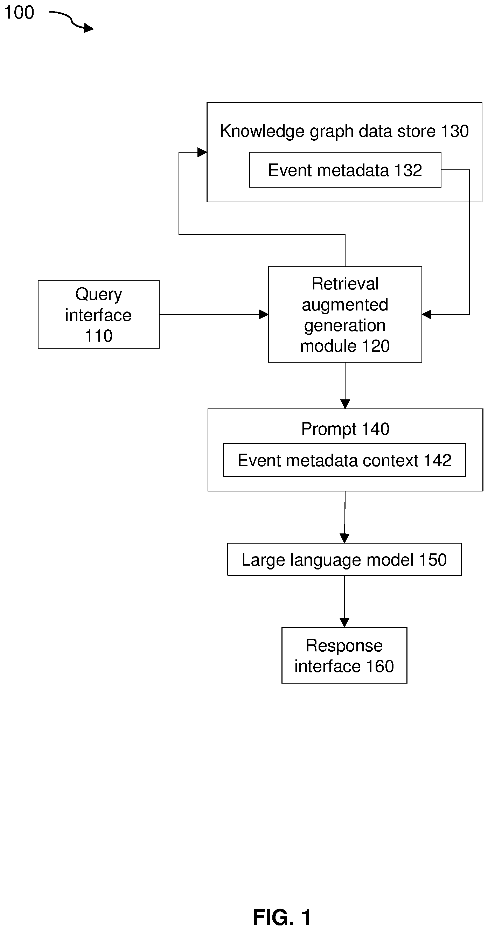

Figure 1 illustrates some elements of an example query answering system 100. A query interface 110 obtains a query, for example via receipt of a command signal, transmission, or input to a user input device. The query is passed to a RAG module 120, which then searches a KG data store 130 for relevant data.

The KG data store 130 stores a KG comprising: a plurality of nodes, each node representing a respective entity (e.g. a cyber threat actor, or a type of malware); and one or more edges, each edge connecting a respective pair of the plurality of nodes to one another. Each node has event metadata associated with it, that event metadata characterising one or more events in which the entity represented by the respective node was involved. The KG data store 130 thus comprises event metadata 132. The KG can for example relate to network security and/or management.

Following search of the KG data store 130, relevant event metadata is returned to the RAG module 120, along with any other relevant data.

The data extracted from the KG data store 130 by the RAG module 120, including relevant event metadata, is used to generate a prompt 140, including event metadata context 142.

The prompt 140 is provided to an LLM 150, which then outputs an answer to the query via a response interface 160, such as a control system input, transmitter, or user output device.

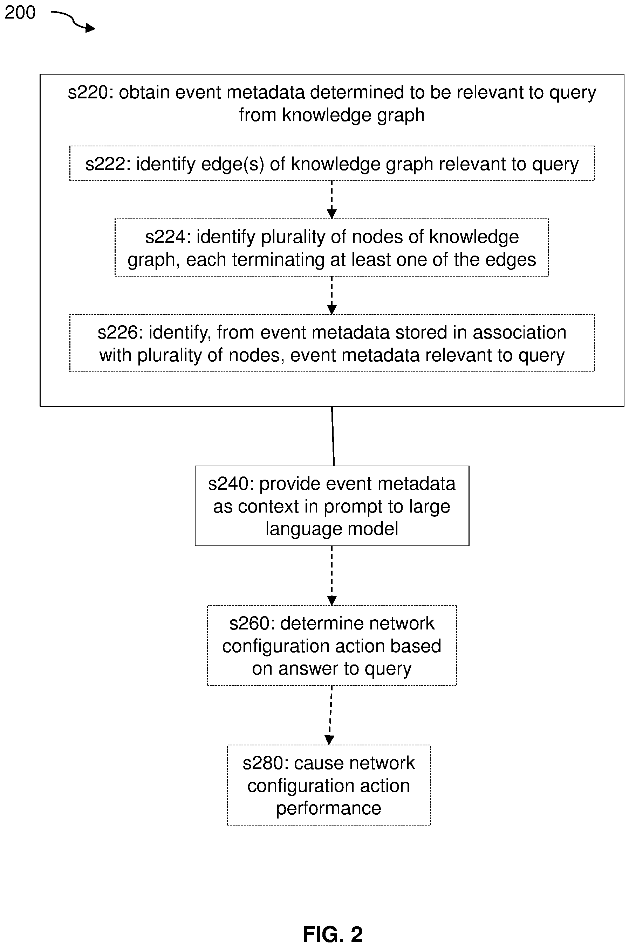

Figure 2 is a flowchart illustrating an example computer-implemented method 200 of using a system such as that illustrated by Figure 1. At step s220, event metadata determined to be relevant to a query is obtained from a KG. Then, at step s240, that event metadata is provided as context in a prompt to an LLM, to answer that query.

If the KG relates to network security and/or management, the method 200 can further comprise, at step s260, determining a network configuration action based on an answer to the query produced by performing steps s220 to s240. Then, at step s280, the network configuration action can be caused to be performed. Network configuration actions can for example comprise one or more of: operating a network switch, e.g. to stop, start, or reroute a data flow; reconfiguring physical infrastructure, e.g. to reposition, remove, or deploy additional components; adjusting data flow parameters, e.g. to throttle or extend capacity; and reconfiguring a network security system, e.g. to reposition, remove, or deploy additional security components, adjust their operating parameters, or isolate a portion of the network.

In some implementations, step s220 can comprise steps s222 to s226. At step s222, one or more edges of the KG of relevance to the query are identified. Then, a plurality of nodes of the KG are identified at step s224, each node of that plurality terminating at least one of those one or more edges. At step s226, event metadata relevant to the query to include in the context for the prompt is identified, from event metadata stored in association with each of that plurality of nodes. In this way, event metadata relevant to a query is efficiently retrieved by first identifying relevant edges, then identifying relevant events involving only the nodes terminating those edges. This two-stage search approach reduces the time and other resources required, compared to exhaustively searching the entire KG.

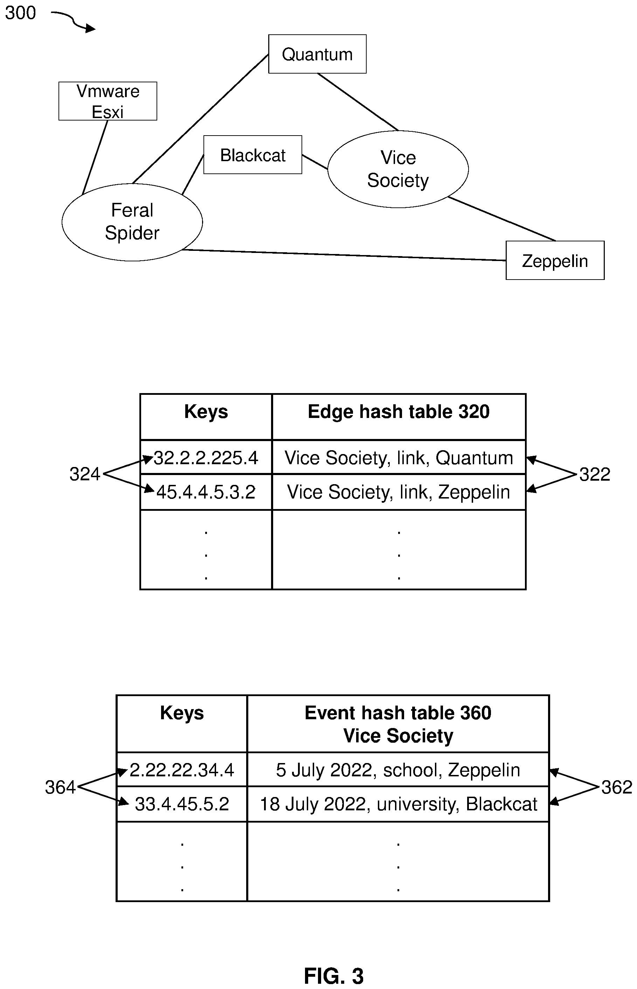

The KG can for example comprise an 'edge hash table' defining its structure, and an 'event hash table' detailing events associated with each node, as illustrated by Figure 3.

A KG extract is shown at 300, indicating cyber threat actor nodes in ovals, and malware nodes in rectangles. Lines joining nodes indicate edges. The data structure used to store the KG makes use of vector embeddings.

Vector embedding is an ML technique which transforms a data set into a set of vectors consisting of real numbers. The reason for this process is to allow a machine to represent a meaning of a data point in relation to other data points. Unlike a human, a machine does not know the meaning of a data point such as a word or document, but it can work with vector representations of data points to represent their meanings. In general, vector embeddings can be generated from the hidden layers of a neural network, or from the output of the middle layer of a neural network. For example, one method of converting words into vectors is known as 'Word2Vec'. Word2Vec is a collection of models for representing words in a corpus of text as a collection of vectors denoting how similar they are to each other depending on sentence context. It involves training a neural network to associate words with each other depending on where they lie within a context. The neural network itself (specifically its weight matrix) is the word embedding and it can be used to predict the context of a given word which appeared in the corpus.

It is proposed herein to make use of vector embeddings to automatically identify relevancy to a query, since vector embedding of text encodes it as a vector in such a way that text snippets which are close to one another in the embedding space are similar in meaning.

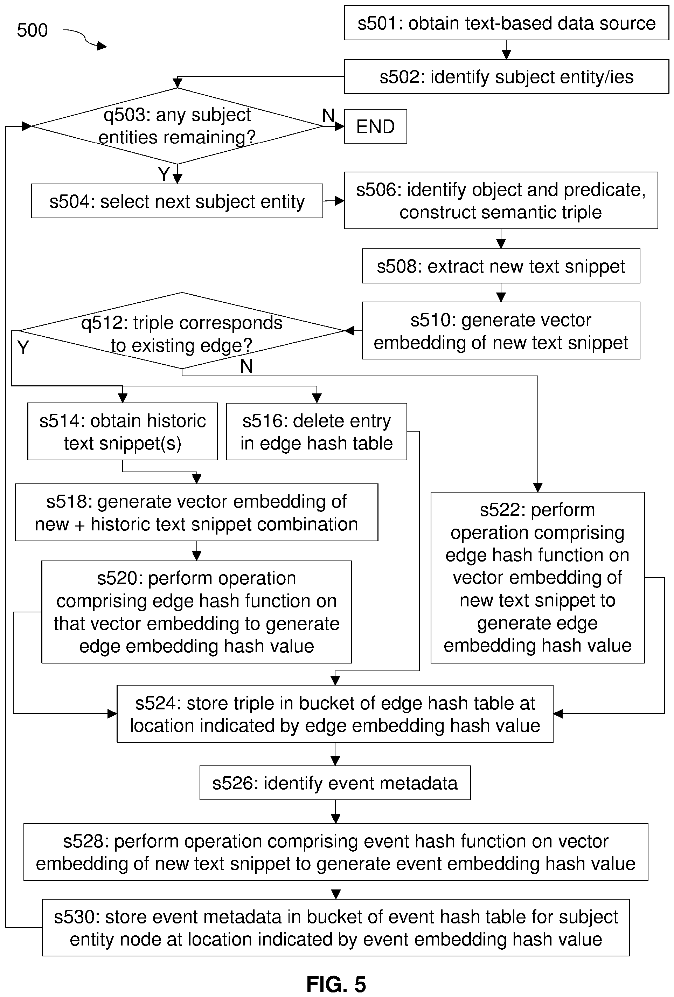

Raw vector embeddings can be used, or an indexing scheme such as Faiss can be used to organise the vector embeddings. The use of indices in conjunction with vector embeddings serves as a means to optimise the processes of searching for and retrieving data relevant to the query. While the vector embedding represents the content of a text snippet in which the event was identified (as will be described in relation to Figure 5 below), the index provides a quick reference point. This approach allows for efficient similarity searches and direct access to the associated data without the computational overhead of directly comparing vector embeddings for each query. The index acts as a unique identifier that simplifies the lookup process, making it more time and resource-efficient.

The data structures described herein comprise hash tables. Hash tables store data in buckets at indexed memory locations. The indices are the result of hashing (i.e. performing a particular type of mathematical operation comprising a hash function on) corresponding keys. Thus a hash table can be thought of, from an informational content perspective, as a two column table, associating keys with bucket contents. Searching a hash table for a particular string is very fast since it requires only a single operation (hashing the string to generate a look-up key).

A data structure storing the KG comprises an edge hash table 320, consisting of buckets 322, each such bucket relating to one of the edges of the KG. Each bucket 322 stores a semantic triple listing the respective pair of nodes connected by that edge as subject and object (e.g. 'Vice Society' and 'Quantum'), together with a predicate designating a type of relationship between them (e.g. 'link'). Each bucket 322 is accessible using a respective key 324 generated from a vector embedding of one or more text snippets from which that semantic triple has been derived. (The key could for example be the vector embedding itself, or an index generated from it, e.g. using the Faiss indexing scheme.) Such text snippets could for example be taken from cyber threat intelligence reports. For example, the second entry shown at 322, 'Vice Society, link, Zeppelin' could have been extracted from the following text snippet.

Several agencies noted in an alert that Vice Society has attacked dozens of educational institutions, including a crippling attack on the Los Angeles Unified School District on 5th July 2022 using ransomware payload Zeppelin.

The data structure further comprises a plurality of event hash tables 360, each event hash table comprising the event metadata associated with a respective one of the plurality of nodes (the example shown in Figure 3 is for Vice Society). Each event hash table 360 consists of a plurality of buckets 362, each such bucket 362 storing event metadata relating to a respective event. In the example of Figure 3, the event metadata format is [attack date], [attack target type], [malware]. Each bucket 362 is accessible using a respective key 364 generated from a vector embedding of a text snippet that event was identified in. (The key could for example be the vector embedding itself, or an index generated from it, e.g. using the Faiss indexing scheme.) For example, the first entry shown at 362, '5 July 2022, school, Zeppelin' could have been extracted from the text snippet above.

Each vector embedding can be generated using an artificial neural network (ANN), optionally a hardware ANN, optionally an ANN trained on data relating to network security and/or management, optionally an ANN which performs deterministic vector embedding. The same ANN (or at least a substantially functional identical ANN, set up and trained in the same way) is used for both vector embedding the data stored in the KG, and the query.

The data structure can be configured for use in a computer-implemented method of configuring a network.

Event data relevant to a query can be efficiently retrieved by first identifying relevant edges using the edge hash table, then identifying relevant events using only the event hash tables associated with the nodes terminating those edges. The event metadata enables resolution of ambiguity which may be present in the basic structure of the KG. (For example, a particular entity may appear in multiple entries of the edge hash table, but not all of the information relating to that entity may be relevant to a query referring to it.) In this way, knowledge noise in the RAG process is reduced.

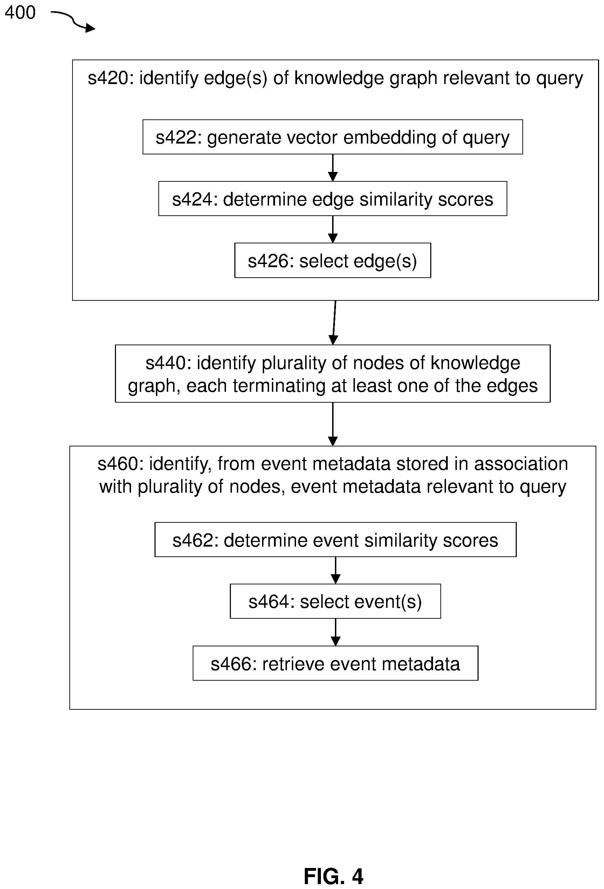

Figure 4 is a flowchart illustrating a process 400 for obtaining event metadata determined to be relevant to a query from a knowledge graph. The method 400 makes use of a data structure like that described above and illustrated by Figure 3. According to the method 400, relevant event details are retrieved from the KG via an efficient two-stage process. First, a vector embedding of the query is used to do a similarity search on a list of all the keys to the edge hash table, returning the T most similar keys (optionally subject to a similarity threshold). Those T keys are then used to retrieve T triples from the edge hash table. The query vector is then used to do a similarity search on a list of all the keys to the event hash tables associated with the nodes identified in those T triples to return the E most similar keys across the T event hash tables (again, optionally subject to a similarity threshold). Those E keys are then used to retrieve details of the E most relevant events from across all of the T event hash tables. Searching the triples first reduces the quantity of event data to be searched.

Steps s420, s440, and s460 respectively correspond to steps s222, s224, and s226 of Figure 2.

Identifying the one or more edges of the KG of relevance to the query at step s420 comprises generating a vector embedding of the query at step s422. Next, an edge similarity score denoting a similarity between the vector embedding of the query and each of the vector embeddings from which the keys of the edge hash table are derived is determined at step s424. Then one or more edges of the KG are selected at step s426 in dependence on the edge similarity scores. For example, edges with similarity scores above a predetermined threshold can be selected, or the top x similarity scores can be selected (where x is a predetermined number), or the top x similarity scores can be selected and then any below a predetermined threshold can be deselected.

Once a plurality of nodes of the knowledge graph terminating at least one of the selected edges have been selected at step s440, metadata relevant to the query is identified at step s460. This comprises determining an event similarity score denoting a similarity between the vector embedding of the query and each of the vector embeddings from which the keys of the event hash tables for the identified nodes are derived at step s462. One or more events are then selected in dependence on the event similarity scores at step s464. Finally, the event metadata stored for those one or more selected events is retrieved at step s466.

Figure 5 is a flowchart illustrating a computer-implemented method 500 of updating the data structure described above.

At step s501, a text-based data source is obtained. One or more subject entities referred to in that data source are then identified at step s502. This can for example be achieved by automatic entity recognition techniques such as named entity recognition (NER).

A process is then performed for each of those subject entities. The loop starts at query q503, where it is determined whether there are any subject entities remaining. If not, the method 500 ends. If so, the next subject entity is selected at step s504.

At step s506, an object entity referred to in the data source is identified, along with a predicate designating a type of relationship between the respective subject and object entities, to construct a semantic triple consisting of the subject entity, object entity, and predicate. This can for example be achieved by using NER to identify the subject and object entities, then searching for a predetermined list of linking words located between those subject and object entities in the text in which they appear.

A new text snippet from which that semantic triple is drawn is then extracted from the data source at step s508. A snippet can for example be extracted by:

(i) identifying a first entity name - this is a potential root node;
(ii) searching the following text for a next entity name (the child node), up to a maximum number of characters/words from the potential root node - discarding the potential root node if no other entities are mentioned within that limit; and
(iii) snipping the block of text (e.g. sentence/paragraph) that both entity names appear in.

At step s510 a vector embedding of the new text snippet is generated.

Query q512 determines whether the semantic triple corresponds to an existing edge of the KG. For example, the edges of the KG can be stored as tuples in a Python dictionary, and the semantic triple can be used as a keyword to search the dictionary.

If the output of query q512 is positive, one or more historic text snippets stored in association with that existing edge are obtained at step s514. An entry in the edge hash table corresponding to that existing edge is also deleted at step s516. A vector embedding of a combination of the new text snippet and the one or more historic text snippets is generated at step s518. Then an operation comprising an 'edge hash function' is performed on that vector embedding at step s520 to generate an 'edge embedding hash value'. (The edge hash function is the same hash function which was used to initially generate the edge hash table.)

If the output of query q512 is negative, the operation comprising the edge hash function is performed on the vector embedding of the new text snippet to generate an edge embedding hash value at step s522.

Whatever the output of query q512, at step s524 the semantic triple is stored in a bucket of the edge hash table at a memory location indicated by the edge embedding hash value (whether generated at step s520 or step s522).

At step s526, associated data in the data source characterising an event involving the subject entity, referred to herein as 'event metadata' is identified.

An operation comprising an 'event hash function' is performed on the vector embedding of the new text snippet to generate an event embedding hash value at step s528. (The event hash function is the same hash function which was used to initially generate the event hash table.) The event metadata is then stored in a bucket of an event hash table for a node of the KG corresponding to the subject entity at a memory location indicated by the event embedding hash value.

## Suitable data processing system

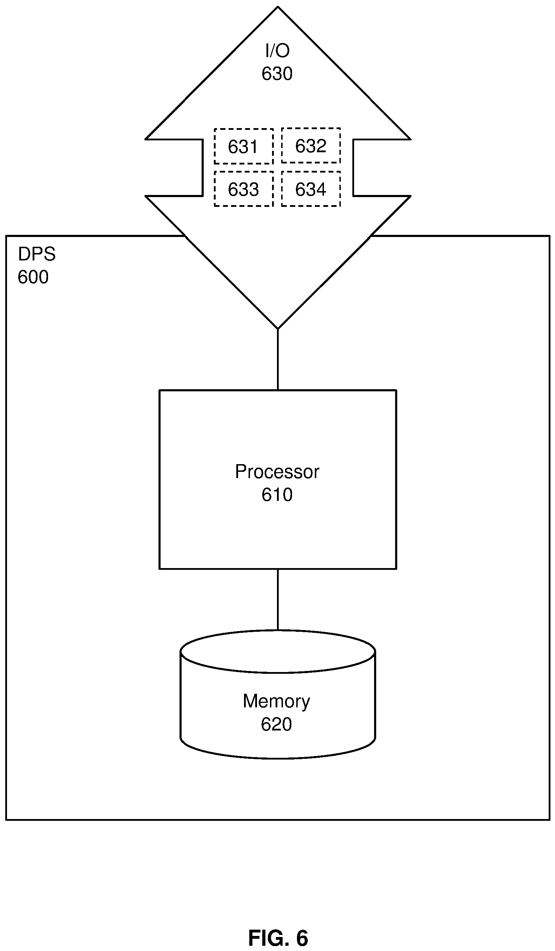

Figure 6 schematically illustrates an example data processing system (DPS) 600 capable of performing any of the methods described above. It comprises a processor 610 operably coupled to both a memory 620 and an interface (I/O) 630.

The memory 620 can optionally comprise computer program instructions which, when the program is executed by the processor 610, cause the data processing system 600 to carry out any of the methods described above. Alternatively or additionally, the interface 630 can optionally comprise one or both of a physical interface 631 configured to receive a data carrier having such instructions stored thereon and a receiver 632 configured to receive a data carrier signal carrying such instructions.

The receiver 632, when present, can be configured to receive messages. It can comprise one or more wireless receiver modules and/or one or more wired receiver modules. The interface 630 can optionally comprise a transmitter 633 configured to transmit messages. The transmitter 633, when present, can comprise one or more wireless transmitter modules and/or one or more wired transmitter modules.

The interface 630 can optionally comprise one or more user interface devices 634.

## ML elements

ML models for NER have been developed. ML is increasingly deployed to address challenges that are unsuitable for being, or too costly to be, addressed using traditional computer programming techniques. Increasing data volumes, widening varieties of data and more complex system requirements tend to require ML techniques. It can therefore be necessary to produce models that can analyse larger, more complex data sets and deliver faster, more accurate results, preferably without programmer intervention. Many different ML algorithms exist and, in general, an ML algorithm seeks to approximate an ideal target function, f, that best maps input variables x (the domain) to output variables y (the range), thus:

$$y = f(x)$$

The ML algorithm as an approximation of f is therefore suitable for providing predictions of y. Supervised ML algorithms generate a model for approximating f based on training data sets, each of which is associated with an output y. Supervised algorithms generate a model approximating $f$ by a training process in which predictions can be formulated based on the output y associated with a training data set. The training process can iterate until the model achieves a desired level of accuracy on the training data. Semi-supervised algorithms can also be employed, such as a hybrid of supervised and unsupervised ML approaches.

Notably, the range, y, of $f$ can be, inter alia: a set of classes of a classification scheme, whether formally enumerated, extensible or undefined, such that the domain x is classified e.g. for labelling, categorising etc.; or a set of clusters of data, where clusters can be determined based on the domain x and/or features of an intermediate range y'. Clustering algorithms can be used, for example, to infer f to describe hidden structure from data including unlabelled data. Such algorithms include, inter alia: k-means; mixture models; neural networks; and hierarchical clustering. Anomaly detection algorithms can also be employed. Classification algorithms address the challenge of identifying which of a set of classes or categories (range y) one or more observations (domain x) belong. Such algorithms are typically supervised or semi-supervised based on a training set of data. Algorithms can include, inter alia: linear classifiers such as Fisher's linear discriminant, logistic regression, Naïve Bayes classifier; support vector machines (SVMs) such as a least squares support vector machine; quadratic classifiers; kernel estimation; decision trees; neural networks; and learning vector quantisation.

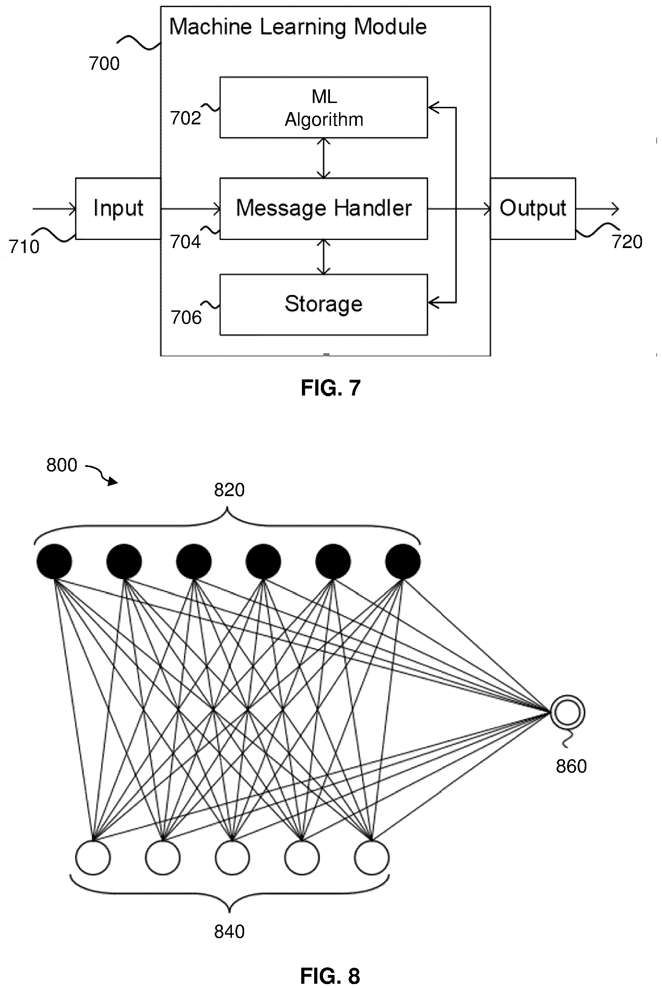

Figure 7 is a component diagram of an example ML module 700 which can be used to perform the ML tasks described above. The ML module 700 is a discrete software module in that it is individual, separate and/or distinct and preferably portable in the sense that the module 700 can be stored and/or transmitted for execution in potentially multiple execution environments such as physical or virtual computer systems or software platforms executing in a computer system such as runtime environments, operating systems, platform software and the like. The module 700 encapsulates functionality and data storage and can be implemented, for example, as an object or instantiable class in an object-oriented environment or as a software library having, in execution, access to a memory such as a memory heap.

The ML module 700 comprises an executable ML algorithm 702 such as any of the ML algorithms hereinbefore described or other suitable ML algorithms as will be apparent to those skilled in the art. Suitable ML algorithms are configurable to execute within the scope of the module 700 based on input parameters including, for example, domain data and/or configuration parameters as an input for the algorithm 702 to generate an ML result such as range data and/or other output data. For example, the ML algorithm 702 can be provided as a method of a software object or a subroutine, procedure, or function in a software library. Thus, the ML algorithm 702 is executable to perform ML functions including any or all of: a training phase of operation for training the algorithm 702 where the algorithm 702 is supervised or semi-supervised; and/or a processing phase of operation of the algorithm for providing one or more ML results.

In conjunction with the ML algorithm 702, and accessible to the algorithm 702, the module 700 further comprises a storage 706 as a data store for the storage of data by the algorithm 702. The storage 706 can be a volatile or non-volatile storage such as a memory, and is encapsulated by the ML module 700 either or both by a declaration, definition, specification or representation of the ML module 700 (such as a software class definition or serialised software component) or by a manner of execution of the module 700 at runtime such as by a memory heap or other memory structure suitable for allocation at runtime for constituting the storage 706 in association with the module 700. Thus, the storage 706 is used, inter alia, by the algorithm 702 for the storage of data required by the algorithm such as ML parameters, ML results, ML data structures including representations of ML models such as, inter alia: tree data structures; representations of regression analysis data structures; representations of neural network data structures; variables; and any other data that may be stored by the ML algorithm 702. Thus, in this way, the ML module 700 provides a discrete encapsulation of an ML algorithm 702 and data required for and by the algorithm 702 within a single module 700.

The ML module 700 further comprises an interface for communication external to the module 700 that is the mechanism through which the algorithm 702 communicates with components and/or entities outside the module 700. The interface can be generalised as comprising an input interface 710 and an output interface 720 that can be defined and/or configured together, and which are connected by a message handler 704 operably connected to the ML algorithm 702 and the storage 706. The input 710 provides a mechanism through which input data can be communicated to the ML module 700 including input for the algorithm 702. The output 720 provides a mechanism through which output data can be communicated by the ML module 700 including output for the algorithm 702. For example, ML parameters including configuration information, training data and ML input (domain) information can be communicated via the input 710 as at least part of input data. Further, for example, ML results such as output data can be communicated via the output 720 as at least part of output data.

Figure 8 schematically illustrates an example restricted Boltzmann machine (RBM) 800, which is a stochastic neural network, i.e. a network of neurons where each neuron has some random behaviour when activated. An RBM such as the RBM 800 can be used to perform the ML tasks described above. The RBM 800 consists of one layer of visible units 820, one layer of hidden units 840, and a bias unit 860. Each visible unit 820 is connected to all the hidden units 840 (this connection is undirected, so each hidden unit 840 is also connected to all the visible units 820), and the bias unit 860 is connected to all the visible units 820 and all the hidden units 840. The bias unit 860 is used to allow other units to learn an appropriate threshold. No visible unit 820 is connected to any other visible unit 820 and no hidden unit 840 is connected to any other hidden unit 840. After successful learning, an RBM provides a closed-form representation of the distribution underlying the training data. The RBM 800 is trained to model a joint probability distribution of inputs tokens and corresponding vector embeddings, both represented by the visible units 820 of the RBM 800. The hidden units 840 represent a reduced set of features that, after training, can constitute a set of latent factors. The RBM 800 works by updating states of some units given the states of others.

Deep learning is a branch of ML which focuses on learning meaningful representations of data. Various deep learning architectures such as deep belief networks, convolutional neural networks, and stacked autoencoders have been applied to fields including natural language processing. Stacked autoencoders can be used to perform the ML tasks described above. An autoencoder is a simple (e.g. 3-layer) artificial neural network composed of, for example, an input layer, a hidden layer, and an output layer. Typically, a number of hidden units (or neurons/nodes) is less than a number of visible (input or output) units. As a result, when data is passed through such a network, it first compresses (encodes) an input vector to "fit" in a smaller representation, and then seeks to reconstruct (decode) it back. For each input x, it is first mapped to a hidden layer y, and an output layer tries to reconstruct x. Training a network seeks to minimise a reconstruction error, i.e. to find a most efficient compact representation (encoding) for input data. Autoencoders are typically trained using backpropagation with stochastic gradient descent. A stacked autoencoder is a neural network consisting of multiple layers of sparse autoencoders in which the outputs of each layer are connected to the inputs of a successive layer. Unsupervised pre-training of a network can be undertaken one layer at a time. Once a first k layers are trained, it is possible to train the (k+1)-th layer using an internal representation (i.e. feature vector) of the k-th layer. The size of feature vector is gradually reduced at each layer. For example, stacked autoencoders can be networked with five layers that compress a number of features from, e.g. 20,000 to 250. During a training phase denoising autoencoders may optionally be used instead of basic autoencoders. A denoising autoencoder adds a stochastic corruption step operating on the input. The idea is to force autoencoders to not learn an identity function, but more robust features, by reconstructing the input from a corrupted version of it. This way an autoencoder needs to capture the statistical dependencies between the inputs to reconstruct a distorted input. To use stacked autoencoders for extracting important features from a data source, all the information collected for each data record in the data source needs to be converted to fixed-size input feature vector. An autoencoder can take an input $x \in [0,1]^d$ and maps it (with an encoder) to a hidden representation $y \in [0,1]^{d'}$. For example, a binary value is assigned to each input node to indicate whether or not particular information or a particular feature is contained in the data record. An entire (binary) input feature vector provides an uncompressed representation for a record. A size of the input vector depends on the (training) datasets and should be large enough to sufficiently represent a variety of possible feature values contained in different event log sets.

## INTERPRETATION NOTES

The preceding description is presented to enable any person skilled in the art to make and use the system and/or perform the method of the invention, and is provided in the context of a particular application. Various modifications to the disclosed examples will be readily apparent to those skilled in the art. It is intended that the specification be considered as exemplary only.

The phrase "consisting of" is intended to mean "including only". The word "comprising" is intended to mean "including at least", and therefore includes, in a limiting case, "consisting of".

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments. For example, steps presented as occurring in series can, given appropriate means (e.g. parallel processors), be implemented in parallel, and vice-versa.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Computing resources, as referred to herein, include electrical power, processing power, and memory (both storage and working memory).

User devices can include, without limitation, static user devices such as PCs and mobile user devices such as smartphones, tablets, laptops, and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

**Claims**

1. A knowledge graph, 'KG', configured for use in a retrieval augmented generation, 'RAG', process, the KG comprising:

    a plurality of nodes, each node representing a respective entity; and
    one or more edges, each edge connecting a respective pair of the plurality of nodes to one another;

    wherein each node has event metadata associated with it, that event metadata characterising one or more events in which the entity represented by the respective node was involved.

2. A computer-implemented retrieval augmented generation, 'RAG', method, comprising:

    obtaining event metadata determined to be relevant to a query from the KG of claim 1; and
    providing that event metadata as context in a prompt to a large language model, 'LLM', to answer that query.

3. The computer-implemented RAG method of claim 2, comprising identifying, in the KG, event metadata to include in the context for the prompt by:

    identifying one or more edges of the KG of relevance to the query;
    identifying a plurality of nodes of the KG, each node of that plurality terminating at least one of those one or more edges; then
    identifying, from event metadata stored in association with each of that plurality of nodes, event metadata relevant to the query to include in the context for the prompt.

4. A data structure storing the KG of claim 1, the data structure comprising:
    a hash table, referred to herein as an 'edge hash table', consisting of one or more buckets, each such bucket:

    relating to one of the edges of the KG;
    storing a semantic triple listing the respective pair of nodes connected by that edge as subject and object, together with a predicate designating a type of relationship between them; and
    being accessible using a key generated from a vector embedding of one or more text snippets from which that semantic triple has been derived; and

    the data structure further comprising:
    a plurality of hash tables, referred to herein as 'event hash tables', each event hash table comprising the event metadata associated with a respective one of the plurality of nodes, wherein each event hash table consists of a plurality of buckets, each such bucket:

    storing event metadata relating to a respective event; and
    being accessible using a key generated from a vector embedding of a text snippet which that event was identified in.

5. The computer-implemented RAG method of claim 3, using the data structure of claim 4, wherein:

    identifying the one or more edges of the KG of relevance to the query comprises:

generating a vector embedding of the query;
determining an edge similarity score denoting a similarity between the vector embedding of the query and each of the vector embeddings from which the keys of the edge hash table are derived; and
selecting one or more edges of the KG in dependence on the edge similarity scores; and

identifying the event metadata relevant to the query comprises:

determining an event similarity score denoting a similarity between the vector embedding of the query and each of the vector embeddings from which the keys of the event hash tables for the identified nodes are derived;
selecting one or more events in dependence on the event similarity scores; and
retrieving the event metadata stored for those one or more selected events.

6. A computer-implemented method of updating the data structure of claim 4, the method comprising:

obtaining a text-based data source;
identifying one or more subject entities referred to in the data source;
for each of one or more of those subject entities:

A. identifying an object entity referred to in the data source, and a predicate designating a type of relationship between the respective subject and object entities, to construct a semantic triple consisting of the subject entity, object entity, and predicate;

I. extracting, from the data source, a new text snippet from which that semantic triple is drawn;
II. generating a vector embedding of the new text snippet;
III. determining whether the semantic triple corresponds to an existing edge of the KG;

a. if so:

i. obtaining one or more historic text snippets stored in association with that existing edge;
ii. deleting an entry in the edge hash table corresponding to that existing edge;
iii. generating a vector embedding of a combination of the new text snippet and the one or more historic text snippets; and
iv. performing an operation comprising an edge hash function on that vector embedding to generate an edge embedding hash value;

b. if not, performing the operation comprising the edge hash function on the vector embedding of the new text snippet to generate an edge embedding hash value;

IV. storing the semantic triple in a bucket of the edge hash table at a memory location indicated by the edge embedding hash value;

B. identifying associated data in the data source characterising an event involving the subject entity, referred to herein as 'event metadata';
C. performing an operation comprising an event hash function on the vector embedding of the new text snippet to generate an event embedding hash value; and
D. storing the event metadata in a bucket of an event hash table for a node of the KG corresponding to the subject entity at a memory location indicated by the event embedding hash value.

7. The computer-implemented method of any of claims 2, 3, 5, or 6, the KG of claim 1, or the data structure of claim 4, wherein the KG relates to network security and/or management.

8. A computer-implemented method of configuring a network, the method comprising:

determining a network configuration action based on an answer to the query produced by performing the method of any of claims 2, 3, or 5; and
causing the network configuration action to be performed.

9. A data processing system configured to perform the method of any of claims 2, 3, 5, or 6 to 8.

10. A computer program comprising instructions which, when the program is executed by a computer, cause the computer to carry out the method of any of claims 2, 3, 5, or 6 to 8.

11. A computer-readable data carrier having stored thereon the KG of claim 1, the data structure of claim 4, or the computer program of claim 10.

12. A data carrier signal carrying the KG of claim 1, the data structure of claim 4, or the computer program of claim 10.

100

Knowledge graph data store 130

Event metadata 132

Query interface 110

Retrieval augmented generation module 120

Prompt 140

Event metadata context 142

Large language model 150

Response interface 160

**FIG. 1**

200

s220: obtain event metadata determined to be relevant to query from knowledge graph

s222: identify edge(s) of knowledge graph relevant to query

s224: identify plurality of nodes of knowledge graph, each terminating at least one of the edges

s226: identify, from event metadata stored in association with plurality of nodes, event metadata relevant to query

s240: provide event metadata as context in prompt to large language model

s260: determine network configuration action based on answer to query

s280: cause network configuration action performance

**FIG. 2**

300

| Keys | Edge hash table 320 |
|---|---|
| 32.2.2.225.4 | Vice Society, link, Quantum |
| 45.4.4.5.3.2 | Vice Society, link, Zeppelin |
| . . . | . . . |

324

322

| Keys | Event hash table 360<br>Vice Society |
|---|---|
| 2.22.22.34.4 | 5 July 2022, school, Zeppelin |
| 33.4.45.5.2 | 18 July 2022, university, Blackcat |
| . . . | . . . |

364

362

**FIG. 3**

400

s420: identify edge(s) of knowledge graph relevant to query

s422: generate vector embedding of query

s424: determine edge similarity scores

s426: select edge(s)

s440: identify plurality of nodes of knowledge graph, each terminating at least one of the edges

s460: identify, from event metadata stored in association with plurality of nodes, event metadata relevant to query

s462: determine event similarity scores

s464: select event(s)

s466: retrieve event metadata

FIG. 4

500

s501: obtain text-based data source

s502: identify subject entity/ies

q503: any subject entities remaining? — N → END

Y

s504: select next subject entity

s506: identify object and predicate, construct semantic triple

s508: extract new text snippet

s510: generate vector embedding of new text snippet

q512: triple corresponds to existing edge?

Y

N

s514: obtain historic text snippet(s)

s516: delete entry in edge hash table

s518: generate vector embedding of new + historic text snippet combination

s520: perform operation comprising edge hash function on that vector embedding to generate edge embedding hash value

s522: perform operation comprising edge hash function on vector embedding of new text snippet to generate edge embedding hash value

s524: store triple in bucket of edge hash table at location indicated by edge embedding hash value

s526: identify event metadata

s528: perform operation comprising event hash function on vector embedding of new text snippet to generate event embedding hash value

s530: store event metadata in bucket of event hash table for subject entity node at location indicated by event embedding hash value

**FIG. 5**

I/O
630

631 632

633 634

DPS
600

Processor
610

Memory
620

**FIG. 6**

**FIG. 7**

**FIG. 8**

**EUROPEAN SEARCH REPORT**

Application Number

EP 25 15 4785

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 193 714 B (SHANDONG INSPUR SCIENCE RESEARCH INSTITUTE CO LTD) 30 July 2024 (2024-07-30) * paragraph [0001] - paragraph [0222] * ----- | 1-12 | INV. G06F16/901 G06N5/02 G06N5/022 |
| A | XIE YUTING ET AL: "Retrieving Entities from Knowledge Graphs without Knowing Much: On Learning Generalizable Patterns and Indexing", 2020 IEEE INTERNATIONAL CONFERENCE ON BIG DATA (BIG DATA), IEEE, 10 December 2020 (2020-12-10), pages 3025-3034, XP033889376, DOI: 10.1109/BIGDATA50022.2020.9378299 [retrieved on 2021-03-12] * the whole document * ----- | 1-12 | |
| A | JEON JONG-HEE ET AL: "RAG-based Cyber Threat Tracing Graph Modeling Method", 2024 IEEE 23RD INTERNATIONAL CONFERENCE ON TRUST, SECURITY AND PRIVACY IN COMPUTING AND COMMUNICATIONS (TRUSTCOM), IEEE, 17 December 2024 (2024-12-17), pages 608-615, XP034884114, DOI: 10.1109/TRUSTCOM63139.2024.00098 [retrieved on 2025-04-04] * the whole document * ----- | 1-12 | TECHNICAL FIELDS SEARCHED (IPC) G06F G06N |

The present search report has been drawn up for all claims

| Place of search | Date of completion of the search | Examiner |
|---|---|---|
| The Hague | 28 June 2025 | Warry, Lawrence |

EPO FORM 1503 03.82 (P04C01)

## ANNEX TO THE EUROPEAN SEARCH REPORT
## ON EUROPEAN PATENT APPLICATION NO.

EP 25 15 4785

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2025

| Patent document cited in search report | Publication date | Patent family member(s) | Publication date |
|---|---|---|---|
| CN 118193714 B | 30-07-2024 | NONE | |

EPO FORM P0459

For more details about this annex : see Official Journal of the European Patent Office, No. 12/82